# DEMANDE DE BREVET EUROPEEN

(11) **EP 1 323 584 A2**
(43) Date de publication de la demande: **02.07.2003**
(21) Numéro de dépôt: 02293077.0
(22) Date de dépôt: 12.12.2002
(51) Int. Cl.: B60R 5/00

(54) **Dispositif de maintien escamotable**

(30) Priorité: 14.12.2001 FR 0116201
(71) Demandeur: Renault s.a.s., 92100 Boulogne Billancourt (FR)
(72) Inventeur: Bernard, Alexandre, 92500 Rueil Malmaison (FR); Boyot, Lionel, 78370 Plaisir (FR)

(57) **Abrégé**

Dispositif de maintien escamotable pour véhicule du type comportant une paroi mobile (1) pourvue d'une poignée (2) et encastrée en position escamotée dans une empreinte (6) située dans une face (5) du véhicule, ladite paroi (1) étant articulée par des moyens de liaison (10) permettant le déplacement de la paroi (1) de ladite position escamotée à une position active, caractérisé en ce que les moyens de liaison (10) sont montés à rotation par leur extrémité supérieure (11) autour d'un axe solidaire de la paroi (1) et parallèle à la direction principale de ladite paroi (1).

## Description

La présente invention concerne les dispositifs de maintien escamotable dans les véhicules automobiles.
Elle concerne plus particulièrement les dispositifs adaptés au stockage de produits conditionnés de telle façon que leur rangement dans les zones dévolues principalement au stockage (comme un coffre) est inapproprié voire risqué.

Les dispositifs de maintien présentent l'avantage de pouvoir stocker par exemple des bouteilles conditionnées à l'unité et d'éviter ainsi d'une part la génération de bruits pendant l'utilisation du véhicule, d'autre part les déplacements potentiels de tels produits comme cela se produit dans les espaces de rangements traditionnels. En effet, des objets non maintenus pendant l'utilisation du véhicule et se trouvant sur un siège, ou dans le coffre alors que les sièges sont rabattus, peuvent se trouver être un véritable danger pour le conducteur ou ses passagers lors d'un arrêt brutal. Il en va donc de la sécurité des utilisateurs et c'est pourquoi les constructeurs s'appliquent à trouver des moyens de rangement supplémentaires.
La publication US 5951085 décrit un système de boîtes de rangement venant s'insérer dans l'habillage du coffre, ledit système offrant alors un plus grand espace de rangement. Toutefois, ces boîtes de rangement sont d'un accès difficile pour l'automobiliste, et d'une réalisation peu aisée pour le constructeur.
En effet, la création d'espaces supplémentaires, en particulier dans le coffre, est dépendante de la place laissée à cet effet par les différents éléments du véhicule. Ainsi, dans le cas d'un rangement dans un coffre, les roues, enfermées dans le passage de roues formant les parois du coffre, interdisent toute création d'évidement pouvant permettre de réaliser un rangement.

Selon une conception connue, des dispositifs de maintien sont constitués d'une sangle de retenue élastique fixée dans l'habitacle, ladite sangle permettant un serrage des objets à stocker. Ces réalisations, très peu esthétique, sont de surcroît peu pratique pour l'utilisateur du fait de la maniabilité du dispositif et risquent de présenter un danger du fait de l'usure possible de la sangle dans le temps.

La présente invention se propose de résoudre ces problèmes en réalisant un dispositif de maintien permettant un rangement aisé, facile d'accès et sécurisé, ledit dispositif étant de surcroît escamotable, ce qui assure un esthétisme certain, et n'imposant pas aux constructeurs par sa réalisation de contraintes supplémentaires d'encombrement.
A cet effet, l'invention a pour objet un dispositif de maintien escamotable pour véhicule du type comportant une paroi mobile pourvue d'une poignée et encastrée en position escamotée dans une empreinte située dans une face du véhicule, ladite paroi étant articulée par un jeu de bielles permettant le déplacement de la paroi de ladite position escamotée à une position active.
Ce dispositif est caractérisé en ce que la paroi dans une position active est ramené à l'aide de moyens de rappel à sa position escamotée.

Selon une autre caractéristique de l'invention, la paroi mobile obture une zone de rangement en retrait de l'empreinte.
Selon une autre caractéristique de l'invention, les bielles sont montées à rotation par leur extrémité supérieure autour d'un axe solidaire de la paroi et parallèle à la direction principale de ladite paroi.
Selon une autre caractéristique de l'invention, la surface de maintien des objets est délimitée par la paroi et la face du véhicule pour le maintien frontal, et par les bielles pour le maintien latéral.

Selon une autre caractéristique de l'invention, les bielles sont montées à rotation par leur extrémité inférieure autour d'un axe solidaire de la face et parallèle à la direction principale de la paroi.
Selon une autre caractéristique de l'invention, les bielles sont rétractables et coulissent selon un axe perpendiculaire au plan de la face du véhicule.
Selon une autre caractéristique de l'invention, les moyens de rappel sont constitués de ressorts.
Selon une autre caractéristique de l'invention, la paroi comporte des moyens de blocage, l'action des moyens de rappel n'étant alors déclenchée que par l'intermédiaire de l'utilisateur.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective du dispositif lorsque la paroi est en position active.

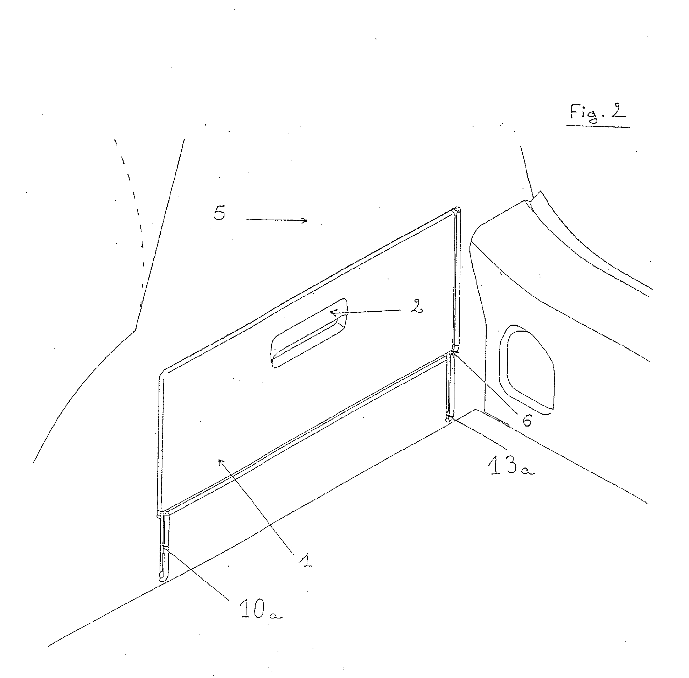

- la figure 2 est une vue en perspective du dispositif lorsque la paroi est en position escamotée.

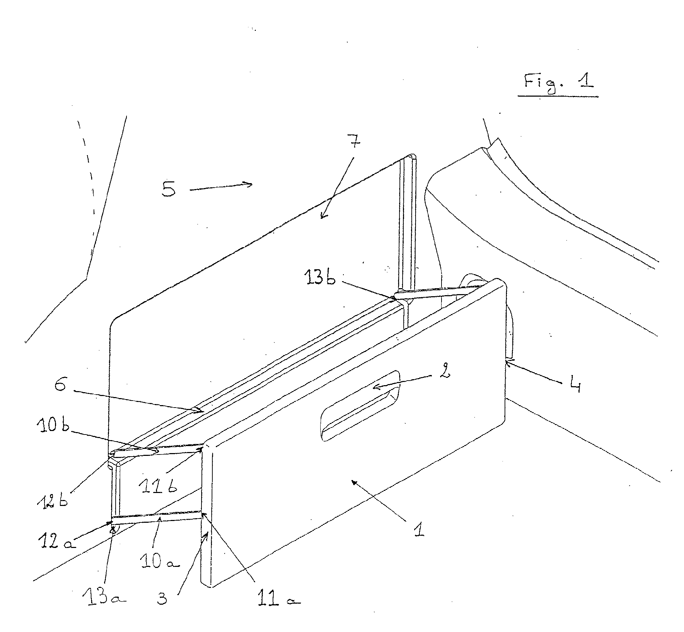

En se référant à la figure 1, une paroi mobile 1 est constituée d'un élément rectangulaire présentant une certaine épaisseur et supportant une poignée 2. A chacune des extrémités 3 et 4 de la paroi 1, des bielles 10 (respectivement 10a,10b..) sont montées à rotation par leur extrémité supérieure 11 (respectivement 11a,11b..) autour d'un axe parallèle à la direction principale de la paroi 1.
Les bielles 10 (respectivement 10a,10b,..) sont également montées à rotation par leur extrémité inférieure (respectivement 12a,12b..) sur une face 5 du véhicule autour d'un axe solidaire de ladite face et parallèle à la direction principale de la paroi 1. Ce montage peut comporter des moyens de rappel 13 (respectivement 13a,13b..), tels que des ressorts, favorisant le retour des bielles 10 (respectivement 10a,10b..) en position verticale. La disposition des bielles 10 forme un parallélogramme déformable.
La face 5 peut être constituée d'un élément d'habillage comportant une empreinte 6 complémentaire de la paroi mobile 1.

L'utilisateur exerce une traction sur la poignée 2 lorsqu'il désire que des objets soient maintenus. La paroi mobile 1, jusqu'alors dans une position escamotée, est déplacée en position active et l'insertion des objets désirés entre la paroi 1 et la face 5 du véhicule est possible. L'utilisateur relâche alors la poignée 2 et la paroi mobile 1 vient exercer un effort de retenue sur les objets intercalés entre ladite paroi mobile 1 et la face 5. Selon le nombre de bielles 10, la présence ou non de moyens de rappel 13, la position et la longueur des bielles 10, qui influent entre autre sur l'amplitude du mouvement de la paroi mobile 1 et sur l'inclinaison par rapport à la verticale du plan de ladite paroi 1, un compromis est trouvé pour maintenir efficacement les objets de petite et de grande taille, les objets ronds, anguleux ou à surface plane.
Après l'utilisation et le retrait des objets maintenus, la paroi 1, sous l'action des moyens de rappel 13, vient se replacer dans sa position escamotée. Dans le cas où une empreinte 6 est située dans la face 5 du véhicule, la paroi 1 vient s'encastrer dans cet empreinte 6 lors du retour en position verticale effectuée par l'action des moyens de rappel.
Cette disposition n'est pas restrictive de l'invention et il sera compris que les bielles 10 peuvent prendre la forme de bras rétractables, coulissant selon un axe perpendiculaire à la direction principale de la paroi 1.

Selon une autre caractéristique de l'invention, un espace de rangement 7 peut être crée en retrait de l'empreinte, la paroi mobile venant alors dans sa position verticale fermer ledit espace 7. La mise en position active de la paroi 1 est alors à double intérêt : un accès à une zone de rangement 7 dissimulée et un dispositif de maintien escamotable plus facile d'accès et plus sure.

Avantageusement, la liaison de la paroi mobile 1 par rapport à la face 5 du véhicule peut comporter des moyens de blocage 14, non représentés sur les figures, afin de permettre à l'utilisateur de se servir de ses deux mains pour insérer les objets à maintenir entre la paroi 1 et la face 5 du véhicule. L'action des moyens de rappel 13 est alors suspendue, jusqu'à ce que l'utilisateur débloque consciemment la paroi 1.

L'invention n'est nullement limitée au mode de réalisation décrit et illustré qui n'a été donné qu'à titre d'exemple.

## Revendications

1. Dispositif de maintien escamotable pour véhicule du type comportant une paroi mobile (1) pourvue d'une poignée (2) et encastrée en position escamotée dans une empreinte (6) située dans une face (5) du véhicule, ladite paroi (1) étant articulée par des moyens de liaison (10) permettant le déplacement de la paroi (1) de ladite position escamotée à une position active,
**caractérisé en ce que** les moyens de liaison (10) sont montées à rotation par leur extrémité supérieure (11) autour d'un axe solidaire de la paroi (1) et parallèle à la direction principale de ladite paroi (1).

2. Dispositif de maintien selon la revendication 1, **caractérisé en ce que** des moyens de rappel (13) ramènent la paroi mobile (1) d'une position active à sa position escamotée.

3. Dispositif de maintien selon la revendication 1 ou 2, **caractérisé en ce que** les moyens de liaison (10) sont montées à rotation par leur extrémité inférieure (12) autour d'un axe solidaire de la face (5) et parallèle à la direction principale de la paroi (1).

4. Dispositif de maintien selon la revendication 1 ou 2, **caractérisé en ce que** les moyens de liaison (10) sont rétractables et coulissent selon un axe perpendiculaire au plan de la paroi mobile (1).

5. Dispositif de maintien selon l'une des revendications précédentes, **caractérisé en ce que** la surface de maintien des objets est délimitée par la paroi (1) et la face (5) du véhicule pour le maintien frontal, et par les moyens de liaison (10) pour le maintien latéral.

6. Dispositif de maintien selon l'une des revendications précédentes, **caractérisé en ce que** la paroi mobile (1), encastrée en position escamotée dans une empreinte (6), obture une zone de rangement supplémentaire (7) en retrait de l'empreinte (6).

7. Dispositif de maintien selon l'une des revendications précédentes, **caractérisé en ce que** les moyens de liaison (10) sont des bielles.

8. Dispositif de maintien selon l'une des revendications précédentes, **caractérisé en ce que** les moyens de rappel (13) sont constitués de ressorts.

9. Dispositif de maintien selon l'une des revendications précédentes, **caractérisé en ce que** la liaison de la paroi (1) par rapport à la face (5) du véhicule comporte des moyens de blocage (14), l'action des moyens de rappel (13) n'étant alors déclenchée que par l'intermédiaire de l'utilisateur.
